(19) **Europäisches Patentamt**

**European Patent Office**

**Office européen des brevets**

(11) **EP 1 539 490 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(51) Int Cl.:
*B32B 27/12* (2006.01)   *F16G 1/16* (2006.01)
*F16G 5/14* (2006.01)

(21) Anmeldenummer: **03797135.5**

(22) Anmeldetag: **11.09.2003**

(86) Internationale Anmeldenummer:
**PCT/CH2003/000614**

(87) Internationale Veröffentlichungsnummer:
**WO 2004/026576 (01.04.2004 Gazette 2004/14)**

(54) **STUMPF VERSCHWEISSBARES TRANSPORTBAND**

BUTT-WELDABLE CONVEYOR BELT

BANDE TRANSPORTEUSE QUI PEUT ETRE SOUDEE BOUT A BOUT

(84) Benannte Vertragsstaaten:
**AT BE BG CH CY CZ DE DK EE ES FI FR GB GR HU IE IT LI LU MC NL PT RO SE SI SK TR**

(30) Priorität: **17.09.2002 CH 157502**

(43) Veröffentlichungstag der Anmeldung:
**15.06.2005 Patentblatt 2005/24**

(73) Patentinhaber: **Habasit AG**
**4153 Reinach (CH)**

(72) Erfinder: **VOGT, Jürg**
**CH-6006 Luzern (CH)**

(74) Vertreter: **Bollhalder, Renato et al**
**A. Braun**
**Braun Héritier Eschmann AG**
**Patentanwälte VSP**
**Holbeinstrasse 36-38**
**4051 Basel (CH)**

(56) Entgegenhaltungen:
**EP-A- 0 760 385       US-A- 4 674 622**
**US-A- 5 958 570       US-A- 5 985 392**

• **PATENT ABSTRACTS OF JAPAN vol. 1995, no. 04, 31. Mai 1995 (1995-05-31) & JP 07 027178 A (BANDO CHEM IND LTD), 27. Januar 1995 (1995-01-27)**

EP 1 539 490 B1

**Beschreibung**

Die vorliegende Erfindung betrifft das Gebiet der Transportbänder, die mit einer textilen Lage verstärkt sind.

Vorbekannte Transportbänder lassen sich grundsätzlich in zwei Gruppen unterteilen: Transportbänder ohne textile Verstärkung, und Transportbänder welche durch wenigstens ein textiles Flächengebilde verstärkt werden.

Transportbänder ohne textile Verstärkungen bestehen aus einer homogenen, relativ dicken Folie eines thermoplastischen Kunststoffes. Dieser Kunststoff muss sowohl die geforderten Oberflächeneigenschaften erreichen als auch die im Band wirkenden Zugkräfte übertragen. In einer besonderen Ausführung wird auf der Laufseite des Bandes ein textiles Flächengebilde aufkaschiert. Dieses hilft mit, die Zugkräfte zu übertragen. Transportbänder ohne textile Verstärkungen weisen einerseits den Vorteil auf, dass sie sich dank der rundum porenfreien Oberfläche gut reinigen lassen. Es können auch keine Flusen oder losen Fasern zu Verunreinigungen führen. Diese Vorteile entfallen allerdings, sobald auf der Laufseite ein textiles Flächengebilde aufgebracht ist. Das Verfahren zum Ausführen von Endverbindungen ist sehr einfach und erfordert nur wenige technische Hilfsmittel. Andererseits weisen sie den Nachteil auf, dass sie sich mit zunehmender Betriebsdauer längen und deshalb immer wieder gekürzt und neu endverbunden werden müssen. Dieses Verhalten entsteht durch das Kriechen des Thermoplasts unter der dauernden Zugspannung. Häufig wird eine mangelhafte Flachlage der Bänder beobachtet, insbesondere im Bereich der Endverbindung.

Zur Erzeugung der Endverbindung werden bei Transportbändern ohne textile Verstärkung beide Enden senkrecht zur Laufrichtung oder unter einem leicht von der Senkrechten abweichenden Winkel, z.B. von 75°, geschnitten. Die Enden werden stumpf zusammengestossen und mit Wärme und Druck miteinander verschmolzen oder mit einer Schweissschnur aus thermoplastischem Kunststoff verschweisst.

Transportbänder mit Verstärkung durch ein textiles Flächengebilde weisen mindestens eine Lage Gewebe auf, die auf der Laufseite, im Innern oder auf der Transportseite des Bandes angeordnet sein kann. Dem oder den Lagen Gewebe kommt dabei die Aufgabe zu, die Kräfte, welches das Transportband zu übertragen hat, aufzunehmen. Die verstärkenden Gewebelagen sind einseitig oder beidseitig mit thermoplastischen Kunststoffen beschichtet. Diese Beschichtungen sorgen für die erforderlichen Oberflächeneigenschaften (Reibwert, Abriebbeständigkeit) und erzeugen eine geschlossene, leicht zu reinigende Oberfläche. Transportbänder mit textilen Verstärkungen weisen den Vorteil auf, dass sie sich trotz der dauernden Zugspannung, der sie ausgesetzt sind, nur sehr geringfügig längen. Sie zeichnen sich durch eine gute Flachlage, auch im Bereich der Endverbindung, aus. Es lassen sich dünne und entsprechend flexible Transportbänder mit hoher Reissfestigkeit realisieren. Nachteilig wirken sich Gewebeverstärkungen auf der Transportseite oder der Laufseite auf die Reinigungseigenschaften aus: Die im Gewebe nach einiger Betriebsdauer entstehenden Poren füllen sich mit Verunreinigungen an, welche nur schwer entfernt werden können. Im Bereich Lebensmitteltransport bildet sich häufig ein Nährboden für unerwünschte oder gefährliche Mikroorganismen und Pilze aus. Wenn das Band durch mechanische Einflüsse am Rand oder auf der Rückseite beschädigt wird, beginnen die verstärkenden Gewebelagen leicht zu fransen oder zu flusen. So aus dem Verbund herausgelöste Fasern oder Faserreste können das Transportgut verunreinigen und die Funktion des Bandes beeinträchtigen.

Um gewebeverstärkte Transportbänder endlos zu machen, werden so genannte Fingerendverbindungen ausgeführt: Die beiden Enden des Bandes werden zickzackförmig ausgestanzt, die Zacken ineinander geschoben und die thermoplastischen Schichten mittels Temperatur und Druck verschmolzen. Die Spitzen der Zacken werden dabei so ausgebildet, dass ihre Flanken typisch im Uhrzeigersinn oder Gegenuhrzeigersinn gemessene Winkel von 170° bis 175° zur Mittellinie des Transportbandes aufweisen. Man geht in der Technik allgemein davon aus, dass Fingerendverbindungen bei gewebeverstärkten Transportbändern erforderlich sind. Erstens nimmt die Zugbelastung pro Längeneinheit der Endverbindung ab, da die Zacken mit ihren steilen Flanken die effektive Gesamtlänge der Endverbindung erhöhen. Sie sollen zweitens zum Verzahnen der Fäden des textilen gewebten Flächengebildes führen und dadurch nur eine geringfügige Abnahme der Zugfestigkeit bei der Endverbindung bewirken (siehe z.B. EP-A-0 240 861, Seite 4, Zeilen 31-33). Drittens verhindert die Ausführung der Endverbindung als Fingerendverbindung beim Umbiegen des Bandes über Rollen das Walken parallel zur Endverbindung und wandelt es in ein Walken nahezu senkrecht zu den Flanken der Zacken der Endverbindung um, was die Materialermüdung in der Endverbindung verlangsamt. Nach Kenntnis der Anmelderin verwenden noch heute sämtliche Hersteller bei gewebeverstärkten Transport-, Prozess- oder Förderbändern das Fingerendverbindungsverfahren zur Herstellung der Endverbindungen. Das Verfahren der Fingerendverbindungen erfordert aber relativ aufwändige und teure Werkzeuge.

Aufgabe der vorliegenden Erfindung ist es, ein durch Transportband zu entwickeln, welches mit einfachen Mitteln endlos gemacht werden kann. Das Transportband soll sich im Betrieb nicht längen, so dass es weder nachgespannt noch gekürzt werden muss, und es soll gespannt oder ungespannt flach liegen, keine Wellen oder Verwölbungen aufweisen.

Die Aufgabe wird erfindungsgemäss gelöst durch ein Transportband, umfassend einen Schichtverbund aus:

   i) einer textilen Lage mit einer ersten Lagenoberfläche und einer zweiten Lagenoberfläche;
   ii) einer an der ersten Lagenoberfläche haftenden ersten Kunststoffschicht aus einem thermoplastischen Kunststoff

mit einer Kriechfestigkeit $v_k$ von höchstens 0,005 bei 30°C, der mindestens 70 Gewichtsprozente eines unvernetzten Thermoplasten mit einer Kriechfestigkeit $v_k$ von höchstens 0,005 bei 30°C enthält; und

iii) einer an der zweiten Lagenoberfläche haftenden zweiten Kunststoffschicht aus einem thermoplastischen Kunststoff mit einer Kriechfestigkeit $v_k$ von höchstens 0,005 bei 30°C, der mindestens 70 Gewichtsprozente eines unvernetzten Thermoplasten mit einer Kriechfestigkeit $v_k$ von höchstens 0,005 bei 30°C enthält;

mit der Massgabe, dass der Quotient $r_v$ nach folgender Formel (I) :

$$r_v = \frac{V_B \rho_T}{G_T} - 1 \qquad\qquad (I),$$

worin $V_B$ das Flächenvolumen des besagten Schichtverbundes und $\rho_T$ die Dichte und $G_T$ das Flächengewicht der textilen Lage bedeuten, einen Wert im Bereich von 5 bis 25 ergibt.

Es wurde überraschenderweise gefunden, dass Transportbänder, die mit einer textilen Lage verstärkt sind, sich in Abkehr von der gängigen Lehrmeinung mittels stumpfer Endverbindungen endlos machen lassen, sofern das Transportband die textile Verstärkung in Form eines Schichtverbundes wie oben definiert umfasst.

Die thermoplastischen Kunststoffe der beiden Kunststoffschichten, die die textile Lage sandwichartig einschliessen, sollen erfindungsgemäss eine Kriechfestigkeit $v_k$ bei 30°C von je höchstens 0,005 aufweisen (in Einheiten von 1 / log(min/min) gemessen, also dimensionslos). Die Kriechfestigkeit $v_k$ ist dabei durch die Formel (II):

$$v_k = (\varepsilon_1 - \varepsilon_0) / (\log(100 \text{ min}) - \log t_0) \qquad (II)$$

definiert. Die Kriechfestigkeit $v_k$ der thermoplastischen Kunststoffe bzw. der darin enthaltenen Thermoplaste wird in einem TA Instruments Dynamic Mechanical Analyzer 2980 (TA Instruments, New Castle, Delaware, USA) ermittelt. Dabei wird ein Probekörper des jeweiligen Kunststoffes von 255 mm Länge und rechteckiger Querschnittsfläche (6,0 x 2,0 mm) in der Probekammer des Analyzers auf 30 $\pm$ 0,1 °C thermostatisiert, bei dieser Temperatur wird während 100 min die allmähliche Zunahme der Länge des Probekörpers unter einer Zugspannung von 1,20 MPa (entsprechend 1,2 N pro mm² Querschnittsfläche) gemessen und als Graph von Dehnung $\varepsilon$ des Probenkörpers gegen Logarithmus der Zeit aufgezeichnet. Als Dehnung $\varepsilon$ wird die Längenzunahme des gedehnter Probekörpers in Prozenten der Länge des Probekörpers vor der Zugbelastung verstanden. Die Kriechfestigkeit $v_k$ nach obiger Formel wird als Steigung aus dem quasilinearen Bereich des Graphen herausgemessen: $t_0$ ist der Zeitpunkt des Beginns des quasilinearen Bereichs des Graphen, $\varepsilon_0$ ist die Dehnung des Probenkörpers zum Zeitpunkt $t_0$ und $\varepsilon_1$ ist die Dehnung des Probenkörpers nach 100 min.

Vorzugsweise weisen die thermoplastischen Kunststoffe der beiden thermoplastischen Kunststoffschichten bei 30°C eine Kriechfestigkeit $v_k$ von höchstens 0,004 und besonders bevorzugt von höchstens 0,003 auf.

Die beiden thermoplastischen Kunststoffschichten des Schichtverbundes können von ihrer stofflichen Zusammensetzung und/oder ihrer Dicke her gleich oder voneinander verschieden sein. Vorzugsweise ist aber der Schmelzpunkt der beiden Kunststoffschichten im Bereich von etwa 80°C bis 170°C und eher bevorzugt im Bereich von etwa 90°C bis 120°C.

Bevorzugte Beispiele für die Kunststoffe der beiden Kunststoffschichten sind Kunststoffe, die mindestens 95 Gewichtsprozente eines Thermoplasten mit der oben angegebenen Kriechfestigkeit enthalten. Erfindungsgemäss einsetzbare solche Thermoplaste sind aus dem Gebiet der Transportbänder ohne textile Verstärkung bereits bekannt. Beispiele sind TPE-A wie etwa PEBA (Polyetherblockamide, hier insbesondere Poly(poly{tetramethylenethylenglykol}-b-poly{ω-laurinlactam}), Poly(poly{tetramethylenethylenglykol}-b-poly{ε-caprolactam}), Poly(polyethylenoxid-b-poly{ω-laurinlactam}) und Poly(polyethylenoxid-b-poly{ε-caprolactam}); TPE-E wie etwa Poly(poly{tetradecakis[oxytetramethylen]oxyterephthaloyl}-b-poly{oxytetramethylenoxyterephthaloyl}); und TPE-U, hier insbesondere Copolymere aus Polyesterdiolen und Diisocyanaten, wobei das Polyesterdiol aus Adipinsäure und Butandiol gebildet sein kann und das Diisocyanat Diphenylmethan-4,4'-diisocyanat sein kann.

Ein erfindungsgemäss bevorzugtes Beispiel für einen Thermoplasten für die Kunststoffschichten 2 und 3 sind die ebenfalls vorbekannten thermoplastische Ethylen-$\alpha$-Olefin-Copolymere mit Verhältnis von Gewichtsmittel $M_w$ zu Zahlenmittel $M_n$ von 5,0 : 1 bis 1,5 : 1 und den Mischungen von zwei oder mehreren dieser Polymere ausgewählt ist (für die Definition der Begriffe Gewichtsmittel und Zahlenmittel siehe z.B. Saechtling, "Kunststofftaschenbuch" 27. Ausgabe, Carl Hanser Verlag München, Seite 17 f.). Diese Werte für Gewichtsmittel und Zahlenmittel bei diesen Copolymeren können insbesondere erzielt werden, wenn das Copolymer mittels eines sogenannten "Single-Site" Katalysators hergestellt ist. Der "Single Site"-Katalysator ist ein in der Technik der Polyolefine seit etwa 11 Jahren üblicher Katalysator, der aus einer Mischung eines Metallocens eines Metalls der Gruppe IVa der Übergangselemente [z.B. Bis(cyclopentadienyl)dimethylzirkonium, aber auch Metallocene mit nur einem Cyclopentadienylligand und allenfalls weiteren Liganden] und einem Kokatalysator bestehen, wobei es die Funktion des Kokatalysators ist, den Metallocen-Katalysator während der Polymerisationsreaktion in den einfach positiv geladenen Zustand zu überführen. Der Kokatalysator bildet dabei ein Gegenanion, das nicht nukleophil ist und nicht an das Metallocen koordiniert. Ein Beispiel für den Kokatalysator ist z.B. polymeres Methylaluminoxan [MAO, -(Me-Al-O)$_n$-], das in einer Menge dergestalt verwendet wird, dass ein Al:Metallocen-Molverhältnis etwa 100:1 bis etwa 10000:1 entsteht. Ein weiteres Beispiel für den Kokatalysator sind Borane mit elektronegativen Substituenten wie etwa polyfluorierten Aromaten.

Besonders bevorzugt bestehen die beiden Kunststoffschichten des Schichtverbundes je zu mindestens 95 Gewichtsprozenten aus einem Ethylen-$\alpha$-Olefin-Copolymer mit den oben genannten Bereichen für das Verhältnis Gewichtsmittel zu Zahlenmittel, wobei das $\alpha$-Olefin 3 bis 12 Kohlenstoffatome, bevorzugt 5 bis 10 Kohlenstoffatomen, besonders bevorzugt 8 Kohlenstoffatomen aufweist. Beispiele für solche $\alpha$-Olefine sind 1-Propen, 1-Buten, 1-Penten, 1-Hexen und 1-Octen; am meisten bevorzugt ist 1-Octen.

Die kriechfesten Termoplasten sind unvernetzte Kunststoffe, also keine Elastomere.

Weitere Bestandteile in den beiden Kunststoffschichten des Schichtverbundes, neben dem kriechfesten Thermoplasten, können andere Thermoplaste wie etwa EVA, EEA, EBA und EMA, und PP sein, sofern sie mit den kriechfesten Thermoplasten verträglich sind und die Kriechfestigkeit der beiden Schichten nicht beeinträchtigen. Weitere Bestandteile in den beiden Kunststoffschichten können auch inerte Pigmente, Flammhemmer, Weichmacher, antibakterielle Mittel u.ä. sein. Die antibakteriellen Mittel können beispielsweise Verbindungen sein, die $Mg^{2+}$, $Ca^{2+}$, $Zn^{2+}$, $Ag^{2+}$, $Cu^{2+}$ oder $Al^{3+}$ enthalten. Insbesondere können dies anorganische solche Verbindungen sein, etwa die Oxide oder Hydroxide dieser Kationen. Beispiele für antibakterielle Mittel sind auch Zinkpyrithion und Imidazol. Es können auch Mischungen aus zweien oder mehreren dieser antibakteriellen Mittel verwendet werden.

Der Quotient $r_V$ ist ursprünglich das Verhältnis von Summe der Flächenvolumina der beiden Kunststoffschichten 2 und 3 zum Flächenvolumen der textilen Lage. In der Formel (I) für den Quotienten $r_V$ bedeuten $V_B$ das Flächenvolumen des Schichtverbundes im erfindungsgemässen Transportband. $V_B$ kann im einfachsten Fall direkt als Gesamtdicke des Schichtverbundes gemessen werden (Volumen / Fläche = Dicke). Dies ist dann der Fall, wenn der Schichtverbund an den Grenzflächen zwischen einer der Kunstoffschichten 2 oder 3 und der textilen Lage vernachlässigbar wenig Lufteinschlüsse aufweist (z.B. 2 vol% oder weniger). Gute Trennwiderstände zwischen den Schichten, etwa wie diejenigen, die von Anspruch 6 gefordert sind, sind ein Indiz für so geringe Anteile an Lufteinschlüssen. $V_B$ kann man natürlich auch aus der Summe der Flächenvolumina der Kunststoffschichten 2 und 3 und dem Flächenvolumen der textilen Lage erhalten werden. Das $\rho_T$ in Formel(I) bedeutet die Dichte (in kg/m$^3$) und $G_T$ das Flächengewicht (in kg/m$^2$) der im Schichtverbund enthaltenen textilen Lage. Als "Dichte $\rho_T$" der textilen Lage wird die mittlere Dichte des Materials verstanden, aus dem die Fäden oder Fasern der textilen Lage bestehen.

In den Fällen, wo das erfindungsgemässe Transportband nur gerade aus dem Schichtverbund wie in Anspruch 1 definiert besteht, kann $V_B$ direkt als das Flächenvolumen des Transportbandes selber bestimmt werden. Falls das Transportband neben dem Schichtverbund wie in Anspruch 1 definiert zusätzliche Lagen und/oder Deckschichten aufweist (siehe unten), können diese vor der Bestimmung von $V_B$ abgeschliffen oder abpoliert werden werden.

Die Werte für $\rho_T$ und $G_T$ können vor dem Einbau der textilen Lage in das Transportband oder an einer aus dem Transportband entnommenen Probe der textilen Lage bestimmt werden. Die Entnahme kann durch mechanisches Ablösen der übrigen Lagen und/oder Schichten von der textilen Lage, gewünschtenfalls unter Erwärmen, erfolgen; falls das erfindungsgemässe Transportband nicht in die einzelnen Lagen auftrennbar ist (siehe unten) kann die textile Lage durch mechanisches Abtragen der übrigen Schichten oder ihr Auflösen in einem geeigneten Lösungsmittel, mit anschliessendem Reinigen der textilen Lage von Resten der thermoplastischen Kunstoffe durch Waschen mit einem geeigneten Lösungsmittel wie etwa DMF und Trocknen isoliert werden.

In einem Spezialfall des erfindungsgemässen Transportbandes kann der Schichtverbund zwei Schichten aus thermoplastischen Kunststoffen mit gleicher Dichte aufweisen, wobei die Dicke der beiden Schichten gleich oder verschieden sein kann. Ein Beispiel für einen solcher Spezialfall sind die erfindungsgemäss bevorzugten Transportbändern mit um die textile Lage symmetrischem Schichtaufbau, so dass sowohl die Dichte der Kunststoffe wie auch die Dicke der beiden Schichten einander gleich sind (siehe unten). Für den obigen Spezialfall kann der Quotient $r_V$ auch wie folgt angegeben werden:

$$r_V = \frac{G_B - V_B\rho_T}{V_B\rho_K - G_B} \qquad\qquad (III)$$

worin $V_B$ und $\rho_T$ dieselbe Bedeutung haben wie in Formel (I), $G_B$ das Flächengewicht (in kg/m$^2$) des gesamten Schichtverbundes des Transportbandes bedeutet und $\rho_K$ die Dichte der beiden thermoplastischen Kunststoffe ist.

Die Dichten, Flächengewichte und Flächenvolumina können für die Zwecke der Formeln (I) und (III) in denjenigen Fällen, wo diese Grössen nicht merklich von der Temperatur abhängen, bei etwa Raumtemperatur bis etwa 30°C gemessen werden. Andernfalls wird die Messung bei 30°C durchgeführt.

Bei den erfindungsgemässen Transportbändern beträgt $r_V$ etwa 5,0 bis etwa 25,0, bevorzugt etwa 10,0 bis etwa 20,0 und besonders bevorzugt etwa 12,0 bis etwa 15,0. Demgegenüber erhält man bei vorbekannten Transportbändern mit verstärkenden textilen Lagen, die mittels Fingerendverbindungen verschweisst werden müssen, für alle darin vorhandenen Schichtverbunde Thermoplast/textile Lage/Thermoplast Werte für $r_V$ von lediglich etwa 1,5 bis etwa 4,0.

Die Art der im erfindungsgemässen Schichtverbund vorhandenen textilen Lage ist nicht kritisch; erfindungsgemäss bevorzugt handelt es sich aber um eine nichtgewebte (d.h. nicht aus Kett- und Schussfäden aufgebaute) textile Lage.

Das Auftragen der beiden Kunststoffschichten auf die textile Lage kann analog zu den jeweiligen Verfahren bei Transportbändern mit gewebter textiler Verstärkung, beispielsweise durch Extrusionsbschichten, Laminieren oder Kalandrieren, geschehen. Für geeignete Beschichtungsverfahren wird beispielhaft auf Saechtling, "Kunststofftaschenbuch" 27. Ausgabe, Kapitel 3.2.7.2, verwiesen.

Die erfindungsgemässen Transportbänder können neben dem bereits diskutierten Schichtverbund noch weitere Lagen und/oder Schichten aufweisen, die auf eine oder beide Kunststoffschichten des Schichtverbundes aufgetragen werden können. Solche zusätzlichen Schichten können weitere Gewebelagen sein, die dann bevorzugt gleichzeitig mit einer weiteren kriechfesten Kunststoffschicht wie oben diskutiert eingesetzt werden, und zwar dergestalt, dass abwechselnd eine textile Lage und eine Kunststoffschicht aufeinander liegen. Weitere Schichten im erfindungsgemässen Transportband können die Haftreibung verstärkende Beschichtungen sein, die auf derjenigen der beiden Kunststoffschichten, die die Transportseite des Transportbandes bilden wird, aufgetragen werden. Das erfindungsgemässe Transportband kann auf derjenigen Kunststoffschicht des Schichtverbundes, die die Transportseite bilden sollte, eine oberflächenmodifizierende Deckschicht erhalten, z.B. zur Erhöhung der Lösungsmittel- oder Chemikalienbeständigkeit, oder zur Verringerung der Adhäsivität. Zur Erhöhung der chemischen Beständigkeit kann die zusätzliche Deckschicht aus z.B. Teflon oder Poly(Vinylidendifluorid) sein. Zur Erhöhung der Lösungsmittelresistenz kann eine Deckschicht aus einem Duroplasten vorgesehen sein, der nach dem Auftragen quervernetzt wird. Es können in allen weiteren Kunststoffschichten und der Deckschicht ebenfalls antibakterielle Mittel der oben genannten Art verwendet werden.

Alle diese weiteren Lagen und/oder Schichten können in Analogie zur Herstellung entsprechender Schichten bei den vorbekannten Transportbändern hergestellt werden.

Erfindungsgemäss bevorzugt sind Transportbänder, die einen um die textile Lage symmetrischen Schichtaufbau aufweisen. Das bedeutet zunächst, dass der Schichtverbund zwei nach Zusammensetzung und Dicke identische Kunststoffschichten aufweist. Des Weiteren sind allfällige weitere Schichten und/oder Lagen ebenfalls immer paarweise und in entgegengesetzt gleicher Reihenfolge auf beiden Seiten des Schichtverbundes vorhanden.

Im Hinblick auf eine brauchbare Flexibilität können die erfindungsgemässen Transportbänder eine Gesamtdicke von bevorzugt etwa 1,5 bis etwa 5 mm, eher bevorzugt von etwa 2 bis etwa 4 mm aufweisen. Bevorzugte Ausführungsformen der erfindungsgemässen Transportbänder sind solche mit einer Breite von etwa 50 mm bis etwa 5000 mm.

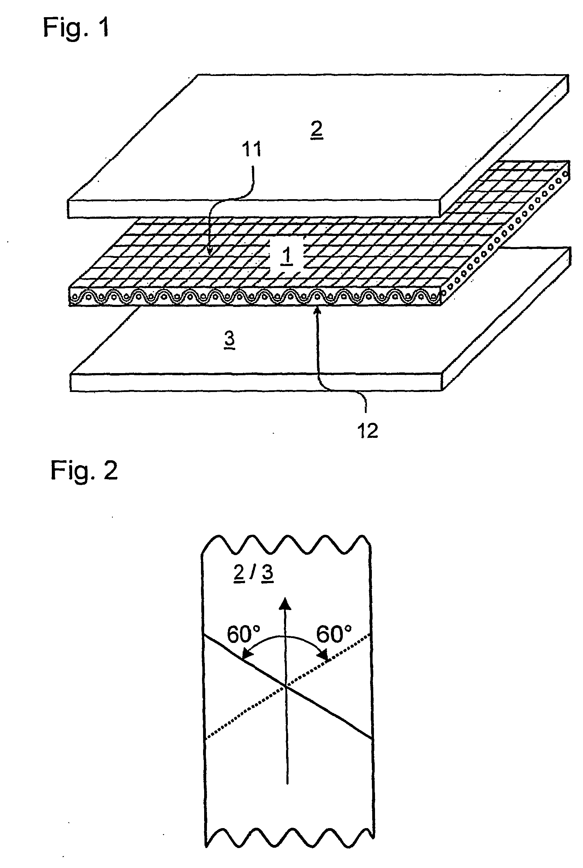

Das Verbinden zu einem endlosen Transportband kann mittels Verschweissen des mit stumpfen Enden versehenen erfindungsgemässen Transportbandes, wie auf dem Gebiet der Transportbänder ohne verstärkende textile Lage üblich, durchgeführt werden, wobei eine stumpfe Endverbindung erhalten wird. Der Begriff "stumpfe" Endverbindung hat im Rahmen der vorliegenden Anmeldung dieselbe Bedeutung wie auf dem Gebiet der Transportbänder ohne verstärkende textile Lage. Er bezeichnet eine Verbindung, die zwei Enden eines zunächst noch nicht endlosen Transportbandes miteinander verbindet, wodurch das Transportband endlos wird. Die beiden Enden sind dabei in einer im Wesentlichen geraden Linie dergestalt geschnitten, dass die Enden zueinander passend zusammengefügt werden können und nach dem Zusammenfügen einem im Wesentlichen geraden Schnitt durch das Transportband gleichkommen, der typisch in einem Winkel von etwa 90° bis etwa 45°, bevorzugt etwa 85° bis etwa 65°, besonders bevorzugt etwa 75° zur Längsrichtung des Transportbandes verläuft, wobei die Messung dieses Winkels im Uhrzeiger- oder im Gegenuhrzeigersinn gemacht sein kann (Figur 2). Ob das Transportband bei dieser Messung von der Schicht 2 oder von der Schicht 3 aus betrachtet wird, ist nicht erheblich, daher wurden in Figur 2 die Bezugszeichen beider Schichten 2 und 3 angegeben. Die obige Definition von "stumpf" ist im Rahmen der vorliegenden Anmeldung auch auf die stumpfen Enden vor deren Verbindung zum endlosen Transportband anwendbar.

Die Bereitstellung des noch nicht endlosen Transportbandes vor der Herstellung der stumpfen Endverbidung geschieht zweckmässig, indem das Transportband unter gleichzeitiger Einführung der stumpfen Enden auf die geforderte Länge zugeschnitten wird. Beim Verschweissen werden die thermoplastischen Eigenschaften der beiden Kunststoffschichten des Schichtverbundes ausgenutzt. Das Verschweissen geschieht typisch unter einem Druck von etwa 0,5 bis etwa 3 bar. Das Verschweissen kann beispielsweise unter Verwendung einer beheizten Presse, wie im deutschen Gebrauchsmuster Nr. 83 32 647 offenbart, durchgeführt werden. Andererseits kann die Endverbindung auch durch Verschweissen unter Verwendung einer Schweissschnur bei Normaldruck durchgeführt werden. Das endlose Transportband sowie das Verfahren zum Verbinden der beiden stumpfen Enden sind weitere Gegenstände der vorliegenden Erfindung.

Die erfindungsgemässen Transportbänder zeichnen sich durch eine geringe Längung im Betrieb aus und müssen daher nicht periodisch gekürzt und neu endverbunden werden. Sie bleiben in Querrichtung flach und neigen nicht zur Wölbung wie die Transportbänder, die nicht mit einer textilen Lage verstärkt sind. Die erfindungsgemässen Transportbänder neigen auch nicht zu seitlichem Ausfransen, so dass eine Kontaminationen des Transportgutes durch Faserreste und Flusen verhindert wird. Die Anfälligkeit auf eingelagerten Schmutz oder Bakterien ist bei den erfindungsgemässen Transportbändern verringert, so dass sie höchsten Anforderungen an die Hygiene gerecht werden.

Erfindungsgemässe Transportbänder können regranuliert und als Rohstoff wiederverwertet werden. Die Wiederverwertbarkeit betrifft sowohl Produktionsabfälle als auch Bänder, welche einen Lebenszyklus hinter sich haben. Zur Wiederverwertung werden die Transportbänder gereinigt, nach gängigen Methoden zerkleinert und in Granulatform gebracht. Das Granulat kann aufgeschmolzen und zur Herstellung neuer Produkte verwendet werden. Aufgrund des grossen $r_v$ bei den erfindungsgemässen Bändern erübrigt sich oft ein Entfernen des relativ geringe Menge der Reste der textilen Lage aus diesem Recyclat.

Die Erfindung wird im Weiteren detailliert unter Bezugnahme auf die Zeichnungen und anhand eines Ausführbeispiels beschrieben. Es zeigen:

Figur 1    eine explodierte Ansicht des Schichtverbundes in einem erfindungsgemässen Transportband,

Figur 2    die Orientierung der Schnittkanten von zwei stumpfen Enden nach dem Zusammenfügen der Enden des noch nicht endlosen Transportbandes. Gezeigt ist eine in einem Winkel von etwa 60° im Gegenuhrzeigersinn von der Laufrichtung des Transportbandes gemessen verlaufende Schnittkante (durchgezogen), wobei die Laufrichtung mit dem Pfeil symbolisiert ist; und eine in einem Winkel von etwa 60° im Uhrzeigersinn von der Laufrichtung des Transportbandes gemessen verlaufende Schnittkante (gestrichelt).

In Figur 1 ist der Aufbau des Schichtverbundes eines erfindungsgemässen Transportbandes gezeigt. Es ist eine textile, beispielsweise gewebte oder nichtgewebte (z.B. gestrickte, gewirkte oder vliesartige) textile Lage 1 vorhanden, auf die die beiden Kunststoffschichten 2 und 3 aufgetragen sind. Der Trennwiderstand, den die beiden Kunststoffschichten 2 und 3 des Schichtverbundes beim Versuch, sie von der textilen Lage 1 zu trennen, zeigen, beträgt bevorzugt je mindestens 2,5 N/mm, wobei die Messung dieses Trennwiderstandes nach der Norm DIN 53530 erfolgt, die hiermit in ihrer Gesamtheit durch Bezugnahme eingeschlossen ist. Eher bevorzugt ist der Trennwiderstand so hoch, dass die Kunststoffschichten 2 und 3 beim Trennversuch eher im Inneren reissen als sich von der textilen Lage 1 ablösen; der Schichtverbund gilt dann als nicht auftrennbar. Der erreichbare Trennwiderstand zwischen den Schichten 2 und 3 und der textilen Lage 1 ist eine Funktion des Materials in allen Schichten (zueinander verträgliche Materialien ergeben einen höheren Trennwiderstand) sowie der Prozesstemperatur und des Prozessdrucks. Durch Erhöhung von Druck und Temperatur wird ein besseres Hineinfliessen der Kunststoffe der Schichten 2 und 3 in die textile Lage 1 erzielt, und es kann dabei nicht nur zu einer Inkorporation der Fäden der textilen Lage 1 in die Schichten 2 oder 3 kommen, es kann auch ein direktes Verschweissen der Schichten 2 und 3 innerhalb der Lage 1 erzielt werden.

Die Dicke der Kunststoffschichten 2 und 3 ist nicht kritisch und kann sich vorzugsweise im Bereich von etwa 0,5 mm bis etwa 3 mm bewegen, wobei der zu erzielenden Zugfestigkeit des Transportbandes bei der Endverbindung (dort wird die Zugfestigkeit des Transportbandes im Wesentlichen nur durch den kriechfesten thermoplastischen Kunststoff der Schichten 2 und 3 bewirkt) und den Anforderungen an die Flexibilität des Transportbandes Rechnung getragen werden kann. Die Dicke der Schichten 2 und 3 kann aber dergestalt aufeinander abgestimmt werden, dass ihrem thermischen Expansionsverhalten Rechnung getragen werden kann. Im Hinblick auf die Vermeidung von Verwellung des Transportbandes durch unterschiedliche Ausdehnung der beiden Schichten 2 und 3 bei Erwärmung im Betrieb ist es bevorzugt, wenn beide Schichten 2 und 3 ein möglichst ähnliches thermisches Ausdehnungsverhalten aufweisen.

Die in Figur 1 gezeigte textile Lage 1 kann, wenn sie nicht gewebt ist, beispielsweise aus Maschen aufgebaut sein, wobei alle Arten von Maschenbildern verwendet werden können. Erfindungsgemäss einsetzbare nicht gewebte textile Lagen 1 zeichnen sich bevorzugt dadurch aus, dass aus ihnen keine Fäden von mehr als 4 cm Länge herausgezogen werden können, d.h. dass sie nicht ausfransen. Die Fäden der textilen Lage 1 können als Mono- oder Multifile ausgeführt sein und bestehen bevorzugt aus einem Material wie etwa Polyamid (Polyamid 6, Polyamid 66, Aramid), Polypropylen, Polyester, Glasfaser, kunststoffgebundener Carbonfaser, Aluminium, Stahl oder Naturfasern wie etwa Baumwolle oder Ramiefaser bestehen. Die Dicke der textilen Lage 1 sowie der darin verwendeten Mono- oder Multifile ist nicht kritisch, und es kann hier primär auf die auf das Transportband einwirkenden Zugkräfte sowie auf die gewünschte Gesamtdicke des Transportbandes, unter Berücksichtigung aller weiteren Schichten, Rücksicht genommen werden.

Es ist nicht kritisch, welche der Schichten 2 oder 3 im fertigen endlosen Transportband die äussere Lage darstellt und mit ihrer Oberfläche die Oberseite des Transportbandes bildet (also diejenige Seite, die mit dem zu transportierenden Gut in Berührung kommt, sofern keine weitere Beschichtung aufgetragen wird).

Die Oberfläche der obersten Schicht des erfindungsgemässen Transportbandes, sei es die Oberfläche einer der Schichten 2 oder 3, oder die Oberfläche einer auf diese Schichten aufgebrachten zusätzlichen Deckschicht, kann auch mechanisch bearbeitet sein, um eine strukturierte Oberfläche, also etwa ein bestimmtes, evtl. dem zu fördernden Gut angepasstes Profil, aufzubringen.

Beispiel 1

Es wurde ein Transportband mit einem um die textile Lage 1 symmetrischen Schichtaufbau hergestellt, mit folgenden Merkmalen:

- Textile Lage 1: Gewirke aus Polyester-Garn mit folgenden Eigenschaften: Dichte $\rho_T$ des Garnmaterials 1,35 g/cm$^3$ Reisskraft in Kettrichtung 42 N/mm, Reissdehnung in Kettrichtung 15,8%, Flächengewicht $G_T$ 0,250 kg/m$^2$, Dicke 0,64 mm, Kraft bei 1% Dehnung 2,4 N/mm.
- Schichten 2 und 3: thermoplastisches Copolymer von Ethylen und 1-Octen, welches mit Hilfe von Metallocen-Katalysatoren synthetisiert worden war (Typ Exact 0203, Hersteller DEX-Plastomers). Dieses Copolymer weist bei 30°C eine Kriechfestigkeit $v_k$ von 0,00293 auf. Das Polymer wurde mittels eines Farbmasterbatches weiss eingefärbt, so dass der Anteil des Weisspigments (Titandioxid) 2,5% bezogen auf die gesamte Mischung betrug. Der fertige thermoplastische Kunststoff wies eine Dichte $\rho_K$ von etwa 0,908 g/cm$^3$ auf.

Die Herstellung erfolgte mittels Extrusionsbeschichtung mit einem Einschnecken-Extruder (Hersteller Maillefer), welcher mit einer Barriereschnecke und mit einer Breitschlitzdüse von 450 mm Breite ausgerüstet war. Die Manteltemperatur des Extruders betrug 180°C, die Temperatur der Breitschlitzdüse betrug 160°C. Die Temperatur der beiden Glättwerkswalzen betrug 60°C.

Das nur gerade aus einen erfindungsgemässen Schichtverbund bestehende Transportband wies eine Gesamtdicke von 2,80 mm (= Flächenvolumen $V_B$), ein Flächengewicht $G_B$ von 2,624 kg/m$^2$ und einen Quotienten $r_V$, berechnet nach Formel (III), von 14,1 auf.

Das Band wurde bei 120°C mit den bekannten Techniken stumpf endverbunden, wobei die Fügestelle einen Winkel von 75° gegenüber der Laufrichtung des Bandes aufwies.

Das Transportband wies folgende mechanische Eigenschaften auf:

| | |
|---|---|
| Kraft bei 1 % Dehnung: | 6,5 N/mm |
| Reisskraft neben Endverbindung | 62,7 N/mm |
| Reisskraft über Endverbindung | 25,2 N/mm |
| Reissdehnung neben Endverbindung | 16,8% |
| Reissdehnung über Endverbindung | 20,7% |
| Trennkraft der Schichten: | nicht trennbar, Schichten reissen |

Alle Messwerte wurden in Längsrichtung bei 23°C und einer relativen Luftfeuchte von 50% ermittelt.

Das Band wies nach 3,5 Millionen Biegewechseln um eine Umlenkrolle mit einem Durchmesser von 40 mm bei einer Bandgeschwindigkeit von 10 m/min und einer Bandspannung von 3,8 N/mm keine Risse oder andere Beschädigungen auf.

Das Band ist gemäss FDA 21 CFR 177.1520, "Olefin Polymers" par. (c) 3.1 b bis zu einer Temperatur von 100°C zugelassen für den Kontakt mit allen Arten von Lebensmitteln.

Beispiel 2

Der Aufbau des Transportbandes war vergleichbar mit jenem in Beispiel 1. Es wurde wiederum das gleiche Gewirke aus Polyester-Garn eingesetzt. Die Schichten 2 und 3 bestanden aus einem Polyetherblockamid, Poly(poly {tetramethylenethylenglykol}b-poly{-laurinlactam}) (Typ Pebax 5533 SA01, Hersteller Atofina). Dieses Copolymer weist bei 30°C eine Kriechfestigkeit $v_k$ von 0,00043 auf. Das Polymer wurde nicht eingefärbt, seine Dichte $\rho_K$, gemessen nach ISO R 1183 betrug 1,01 g/cm$^3$. Die Herstellung erfolgte mittels Extrusionsbeschichtung mit einem Einschnecken-Extruder (Hersteller Maillefer), welcher mit einer Barriereschnecke und einer Breitschlitzdüse von 450 mm Breite ausgerüstet war. Die Manteltemperatur des Extruders betrug 180°C, die Temperatur der Breitschlitzdüse betrug 170°C. Die Temperatur der beiden Glättwerkswalzen betrug 90°C. Das nur gerade aus einem erfindungsgemässen Schichtverbund bestehende Transportband wies eine Gesamtdicke von 3,0 mm (= Flächenvolumen $V_B$), ein Flächengewicht $G_B$ von 3,09 kg/m$^2$ und einen Quotienten $r_V$, berechnet nach Formel (III), von 15,2 auf. Das Band wurde bei 180°C mit den bekannten Techniken stumpf endverbunden, wobei die Fügestelle einen Winkel von 75° gegenüber der Laufrichtung des Bandes aufwies.

Beispiel 3

Der Aufbau des Transportbandes war vergleichbar mit jenem in Beispiel 1. Es wurde wiederum das gleiche Gewirke aus Polyester-Garn eingesetzt. Die Schichten 2 und 3 bestanden aus einem TPE-U, welches ein Copolymer eines Polyesterdiols und eines Diisocyanats ist (Typ Estane 58277, Hersteller Noveon). Dieses Copolymer weist bei 30°C eine Kriechfestigkeit $v_k$ von 0,0040 auf. Das Polymer wurde nicht eingefärbt, seine Dichte $\rho_k$, gemessen nach DIN 53479, betrug 1,19 g/cm$^3$. Die Herstellung erfolgte mittels Extrusionsbeschichtung mit einem Einschnecken-Extruder (Hersteller Maillefer), welcher mit einer Barriereschnecke und einer Breitschlitzdose von 450 mm Breite ausgerüstet war. Die Manteltemperatur des Extruder betrug 190°C, die Temperatur der Breitschlitzdüse betrug 190°C. Die Temperatur der beiden Glättwerkswalzen betrug 40°C. Das nur gerade aus einem erfindungsgemässen Schichtverbund bestehende Transportband wies eine Gesamtdicke von 4,0 mm auf (= Flächenvolumen $V_B$), ein Flächengewicht $G_B$ von 4,79 kg/m$^2$ und einen Quotienten $r_v$, berechnet nach Formel (III), von 20,4 auf. Das Band wurde bei 170°C mit den bekannten Techniken stumpf endverbunden, wobei die Fügestelle einen Winkel von 75° gegenüber der Laufrichtung des Bandes aufwies. Das Band ist gemäss FDA 21 CFR 177.2600 ohne Temperatureinschränkung zugelassen für den Kontakt mit allen Arten von Lebensmitteln.

**Patentansprüche**

1. Transportband umfassend einen Schichtverbund aus:

   i) einer textilen Lage (1) mit einer ersten Lagenoberfläche (11) und einer zweiten Lagenoberfläche (12);
   ii) einer an der ersten Lagenoberfläche (11) haftenden ersten Kunststoffschicht (2) aus einem thermoplastischen Kunststoff mit einer Kriechfestigkeit $v_k$ von höchstens 0,005 bei 30°C, der mindestens 70 Gewichtsprozente eines unvernetzten Thermoplasten mit einer Kriechfestigkeit $v_k$ von höchstens 0,005 bei 30°C enthält; und
   iii) einer an der zweiten Lagenoberfläche (12) haftenden zweiten Kunststoffschicht (3) aus einem thermoplastischen Kunststoff mit einer Kriechfestigkeit $v_k$ von höchstens 0,005 bei 30°C, der mindestens 70 Gewichtsprozente eines unvernetzten Thermoplasten mit einer Kriechfestigkeit $v_k$ von höchstens 0,005 bei 30°C enthält;

   mit der Massgabe, dass der Quotient $r_v$ nach folgender Formel (I) :

$$ r_v = \frac{V_B \rho_T}{G_T} - 1 \qquad (I), $$

   worin $V_B$ das Flächenvolumen des besagten Schichtverbundes und $\rho_T$ die Dichte und $G_T$ das Flächengewicht der textilen Lage (1) bedeuten, einen Wert im Bereich von 5 bis 25 ergibt.

2. Transportband nach Anspruch 1, **dadurch gekennzeichnet, dass** die thermoplastischen Kunststoffe der Kunststoffschichten (2) und (3) je mindestens 95 Gewichtsprozente eines Thermoplasten mit einer Kriechfestigkeit $v_k$ von höchstens 0,005 bei 30°C enthalten.

3. Transportband nach Anspruch 2, **dadurch gekennzeichnet, dass** die Thermoplasten aus TPE-A wie etwa PEBA, insbesondere Poly(poly{tetramethylenethylenglykol}-b-poly{ω-laurinlactam}), Poly(poly{tetramethylenethylenglykol}-b-poly{ε-caprolactam}), Poly(polyethylenoxid-b-poly{ω-laurinlactam}) und Poly(polyethylenoxid-b-poly{ε-caprolactam}) ; TPE-E wie etwa Poly(poly{tetradecakis[oxytetramethylen]oxyterephthaloyl}-b-poly{oxytetramethylenoxyterephthaloyl}); TPE-U, insbesondere den aus Polyesterdiolen und Diisocyanaten hergestellten TPE-U; und den Ethylen-α-Olefin-Copolymeren mit Verhältnis von Gewichtsmittel $M_w$ zu Zahlenmittel $M_n$ von 5,0 : 1 bis 1,5 : 1 ausgewählt sind.

4. Transportband nach einem der Ansprüche 1 bis 3, **dadurch gekennzeichnet, dass** die beiden Schichten (2) und (3) aus dem selben thermoplastischen Kunststoff bestehen.

5. Transportband nach einem der Ansprüche 1 bis 4, **dadurch gekennzeichnet, dass** die textile Lage (1) nicht gewebt ist.

**6.** Transportband nach einem der Ansprüche 1 bis 5, **dadurch gekennzeichnet, dass** die Trennwiderstände zwischen Schicht (2) und textiler Lage (1) und zwischen Schicht (3) und textiler Lage (1) je mindestens 2,5 N/mm, nach der Norm DIN 53530 gemessen, betragen.

**7.** Transportband nach einem der Ansprüche 1 bis 6, umfassend eine Deckschicht.

**8.** Transportband nach einem der Ansprüche 1 bis 7, enthaltend in der Schicht (2) und/oder der Schicht (3) und/oder der wahlweisen Deckschicht antibakterielle Mittel.

**9.** Transportband nach einem der Ansprüche 1 bis 8, **dadurch gekennzeichnet, dass** es einen um die textile Lage (1) symmetrischen Schichtaufbau aufweist.

**10.** Transportband nach einem der Ansprüche 1 bis 9, mit einer Breite von 50 bis 5000 mm.

**11.** Endloses Transportband nach einem der Ansprüche 1 bis 10, umfassend eine stumpfe Endverbindung.

**12.** Transportband nach einem der Ansprüche 1 bis 10, umfassend zwei stumpfe Enden.

**13.** Verfahren zum Endlosmachen eines Transportbandes nach Anspruch 1, wobei dieses Verfahren umfasst:

  i) Bereitstellen des Transportbandes mit stumpfen Enden,
  ii) Verschweissen der stumpfen Enden.


**Claims**

**1.** Conveyor belt comprising a layered composite of:

  i) a textile ply (1) with a first ply surface (11) and a second ply surface (12);
  ii) a first plastic layer (2) adhering to the first ply surface (11), consisting of a thermoplastic plastic with a creeping strength $v_k$ of at the most 0.005 at 30°C, which contains at least 70 percent by weight of a non-crosslinked thermoplastic with a creeping strength $v_k$ of at the most 0.005 at 30°C; and
  iii) a second plastic layer (3) adhering to the second ply surface (12), consisting of a thermoplastic plastic with a creeping strength $v_k$ of at the most 0.005 at 30°C, which contains at least 70 percent by weight of a non-crosslinked thermoplastic with a creeping strength $v_k$ of at the most 0.005 at 30°C;

with the proviso that the quotient $r_v$ gives a value in the range of 5 to 25 according to the following Formula (I):

$$r_v = \frac{V_B \rho_T}{G_T} - 1 \qquad\qquad (I),$$

wherein $V_B$ denotes the volume per unit area of the said layered composite and $\rho_T$ denotes the density of the textile ply (1), and $G_T$ denotes the weight per unit area of the textile ply (1).

**2.** Conveyor belt according to claim 1, **characterised in that** the thermoplastic plastics of the plastic layers (2) and (3) each contain at least 95 percent by weight of a thermoplastic with a creeping strength $v_k$ of at the most 0.005 at 30°C.

**3.** Conveyor belt according to claim 2, **characterised in that** the thermoplastics are selected from TPE-A such as PEBA, in particular poly(poly{tetramethylene ethylene glycol}-b-poly{ω-laurinlactam}), poly(poly{tetramethylene ethylene glycol}-b-poly{ε-caprolactam}), poly(polyethylene oxide-b-poly{ω-laurinlactam}) and poly(polyethylene oxide-b-poly{ε-caprolactam}); TPE-E such as poly(poly{tetradecakis[oxytetramethylene]oxyterephthaloyl}-b-poly{oxytetramethylene oxyterephthaloyl}); TPE-U, in particular TPE-U produced from polyesterdiols and diisocyanates, and the ethylene-α-olefin-copolymers with ratio of weight average molecular weight $M_w$ to number average molecular weight $M_n$ of 5.0 : 1 to 1.5 : 1.

**4.** Conveyor belt according to any one of claims 1 to 3, **characterised in that** the two layers (2) and (3) consist of the same thermoplastic plastic.

**5.** Conveyor belt according to any one of claims 1 to 4, **characterised in that** the textile ply (1) is non-woven.

**6.** Conveyor belt according to any one of claims 1 to 5, **characterised in that** the separation resistance between layer (2) and textile ply (1) and between layer (3) and textile ply (1) is in each case at least 2.5 N/mm, measured according to the standard DIN 53530.

**7.** Conveyor belt according to any one of claims 1 to 6, comprising a top coating.

**8.** Conveyor belt according to any one of claims 1 to 7, containing anti-bacterial agents in the layer (2) and/or the layer (3) and/or the optional top coating.

**9.** Conveyor belt according to any one of claims 1 to 8, **characterised in that** it has a layer construction which is symmetrical around the textile ply (1).

**10.** Conveyor belt according to any one of claims 1 to 9, with a width of 50 to 5000 mm.

**11.** Endless conveyor belt according to any one of claims 1 to 10, comprising a butt end-to-end joint.

**12.** Conveyor belt according to any one of claims 1 to 10, comprising two butt ends.

**13.** Method for making a conveyor belt according to claim 1 endless, wherein this method comprises:

    i) providing the conveyor belt with butt ends,
    ii) welding together of the butt ends.

**Revendications**

**1.** Bande transporteuse, comprenant une structure composite stratifiée composée de :

    (i) un pli textile (1) ayant une première surface de pli (11) et une seconde surface (12) du pli;
    (ii) une première couche (2) de matière plastique adhérant à la première surface de pli (11), faite d'une matière thermoplastique ayant une résistance au fluage $v_k$ ne dépassant pas 0,005 à 30°C, et contenant au moins 70 pour-cent en poids d'une matière thermoplastique non réticulée présentant une résistance au fluage $v_k$ ne dépassant pas 0,005 à 30°C; et
    (iii) une seconde couche (3) de matière plastique adhérant à la seconde surface (12) du pli, faite d'une matière thermoplastique ayant une résistance au fluage $v_k$ ne dépassant pas 0,005 à 30°C, et contenant au moins 70 pour-cent en poids d'une matière thermoplastique non réticulée présentant une résistance au fluage $v_k$ ne dépassant pas 0,005 à 30°C;

sous réserve que le quotient $r_v$ selon la formule (I) :

$$r_v = \frac{V_B \rho_T}{G_T} - 1 \qquad\qquad (I)$$

dans laquelle $V_B$ est le volume par surface de ladite structure stratifiée composite, et $\rho_T$ est la densité et $G_T$ le poids par surface du pli textile (1), donne une valeur comprise entre 5 et 25.

**2.** Bande transporteuse selon la revendication 1, **caractérisée en ce que** les matières thermoplastiques des couches de matières plastiques (2) et (3) contiennent chacune au moins 95 pour-cent en poids d'une matière thermoplastique ayant une résistance au fluage $v_k$ ne dépassant pas 0,005 à 30°C.

**3.** Bande transporteuse selon la revendication 2, **caractérisée en ce que** les matières thermoplastiques sont sélectionnées parmi des TPE-A tels que du PEBA, en particulier du poly(poly{tétraméthylène-éthylène-glycol}-b-poly{ω-lactame laurique}), du poly(poly{tétraméthylène-éthylène-glycol}-b-poly{ε-capro-lactame}), du poly(polyéthylène-oxyde-b-poly{ω-lactame laurique}) et du poly(polyéthylène-oxyde-b-poly{ε-capro-lactame}); des TPE-E tels que du poly(poly{tétradécakis[oxy-tétraméthylène]-oxy-térephthaloyle}-b-poly(oxy-tétraméthylène-oxy-térephthaloyle}); et des TPE-U, en particulier des TPE-U composés de polyesterdiols et de di-isocyanates; et des copolymères d'éthylène et d'α-oléfines ayant un rapport entre la moyenne en poids $M_w$ et la moyenne en nombre $M_n$ de 5,0:1 à 1,5:1.

4. Bande transporteuse selon l'une des revendications 1 à 3, **caractérisée en ce que** les deux couches (2) et (3) sont faites de la même matière thermoplastique.

5. Bande transporteuse selon l'une des revendications 1 à 4, **caractérisée en ce que** le pli textile (1) n'est pas tissé.

6. Bande transporteuse selon l'une des revendications 1 à 5, **caractérisée en ce que** les résistances au décollement entre la couche (2) et le pli textile (1) et entre la couche (3) et le pli textile (1) sont chacune d'au moins 2,5 N/mm, mesurées suivant la norme DIN 53530.

7. Bande transporteuse selon l'une des revendications 1 à 6, comprenant une couche de protection extérieure.

8. Bande transporteuse selon l'une des revendications 1 à 7, comprenant des substances bactéricides dans la couche (2) et/ou la couche (3) et/ou, le cas échéant, dans la couche de protection extérieure.

9. Bande transporteuse selon l'une des revendications 1 à 8, **caractérisée en ce qu'**elle présente une construction symétrique des couches de part et d'autre de son pli textile (1).

10. Bande transporteuse selon l'une des revendications 1 à 9, ayant une largeur de 50 à 5000 mm.

11. Bande transporteuse sans fin selon l'une des revendications 1 à 10, comprenant un joint bout-à-bout sans dentelures.

12. Bande transporteuse selon l'une des revendications 1 à 10, comprenant deux bouts droits.

13. Procédé de transformation d'une bande transporteuse selon la revendication 1 en une bande transporteuse sans fin, le procédé comprenant:

(i) la fourniture d'une bande transporteuse à bouts sans dentelures,
(ii) le soudage des bouts sans dentelures l'un à l'autre.

## Fig. 1

## Fig. 2